# EUROPEAN PATENT APPLICATION

(11) **EP 2 512 118 A1**
(43) Date of publication of application: **17.10.2012**
(21) Application number: 10843684.1
(22) Date of filing: 04.05.2010
(51) Int. Cl.: H04N 5/232

(54) **CONTROL METHOD AND APPARATUS FOR MASTER-SLAVE MODE DUAL CAMERAS OF WIRELESS TERMINAL**

(30) Priority: 22.01.2010 CN 201010102644
(71) Applicant: ZTE Corporation, Shenzhen, Guangdong 518057 (CN)
(72) Inventor: GUAN, Leiming, Shenzhen Guangdong 518057 (CN)
(74) Representative: Jansen, Cornelis Marinus
(86) International application number: PCT/CN2010/072435
(87) International publication number: WO 2011/088643

(57) **Abstract**

The disclosure provides a method and apparatus for controlling dual cameras in a wireless terminal in a master-slave mode, in order to avoid interferences that may occur between the dual cameras due to sharing of data buses. In the disclosure, as the master processor uses a set of resources to control the two cameras, the resources of the master processor may be saved which otherwise will be occupied by the dual cameras, the dependency of the cameras on the master processor is reduced, so that the master processor may release more resources for other peripherals or other tasks. As the multiplexer switch isolates signals of the two camera sensors in a relatively thorough way, mutual interferences between the two cameras may be avoided and electromagnetic interferences may be decreased.

## Description

### TECHNICAL FIELD

The disclosure relates to the field of mobile communications, and particularly to a method and apparatus for controlling master-slave mode cameras in a wireless terminal.

### BACKGROUND

The mobile communication technique now has entered the third generation (3G). Data services have been widely applied in wireless terminals. The present wireless terminals are not merely mobile phones, but they are being more closely incorporated with Internet. In a 3G network, a user may carry out an application of video phone. In this case, it is preferred that a wireless terminal has two cameras, one has higher requirement on pixels and is for daily photo shooting, and the other has relatively lower requirement on pixels and may be used for self-snapshot, for example: in the applications of video phone and instant messaging system.

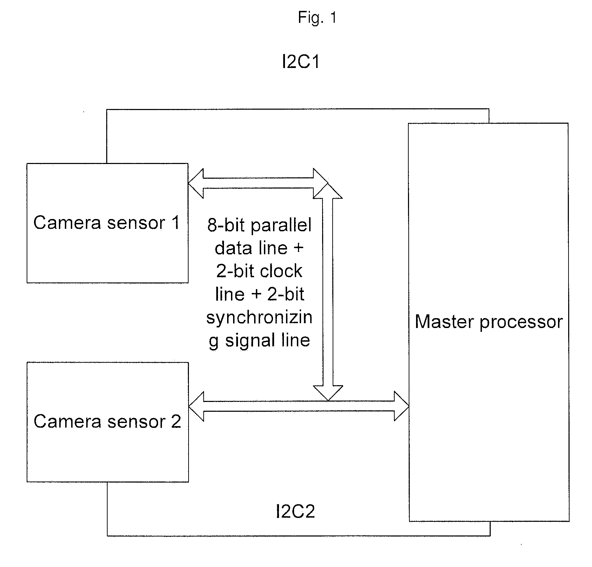

Cameras have independent sensors. All the existing universal application schemes for two cameras are to directly connect the sensors of the two cameras to the master processor and share the data interface signals of the cameras, as shown in FIG. 1. This approach has a serious defect: the isolation of the shared digital signals is undesirable. Particularly, nowadays the pixels of cameras are getting closer to those of digital cameras, reaching five million pixels and even eight million pixels. Tens of millions pixels, which are same as those of digital cameras, may be expected in the near future. Accordingly, data volume would be large and very high rate is required. In this case, mutual interferences of shared signals are a problem that every terminal designer must consider.

The data interfaces of camera sensors can be classified into serial data interface and parallel data interface. Which kind of interface is adopted is decided by the master processor of a terminal in general and cannot be changed. The popular interface is parallel data bus interface. An 8-bit parallel interface also needs two synchronizing signals and two clock signals. There are 12 main high-speed data signals. For a mobile phone with dual cameras, if the two sensors share the 12 high-speed data signals, serious mutual interferences will be generated. When a wireless terminal is powered on and starts up, camera sensors are initialized and then enter a power saving mode. The power saving mode does not mean to cut off power supply to the sensors but to maintain power supply and switch the sensors into an operating mode with low power consumption. The sensors will not enter a normal operating mode unless a user uses the camera. This means that when a user uses one of the cameras, the data signals of another camera sensor are electrically connected to the master processor although there are no valuable data on them. This electrical connection may cause unpredictable unfavorable impact on the sensor being used, the master processor and the peripherals related to the cameras, such as: display screen, in the initial state and other uncertain states.

In some of the existing schemes, an analog switch may be used to isolate important signals, for example, clock signals, but such schemes only isolate two clock signals. From the perspective of the master processor, still two groups of data lines need to be connected to respective sensors in a decentralized manner, the wiring space is not improved and the improvement in EMC (Electro Magnetic Compatibility) is not obvious, either.

### SUMMARY

In view of the above, the main object of the disclosure is to provide a method and apparatus for controlling master-slave mode cameras in a wireless terminal, in order to avoid interferences that may occur between the dual cameras due to sharing of data buses.

To implement the foregoing object, the disclosure proposes the following technical solutions.

A method for controlling master-slave mode cameras in a wireless terminal includes the following steps:
image data is input from a master camera sensor or image data of a slave camera sensor to an image processing unit via gating of a multiplexer switch, under control of a master processor; and the image data processed by the image processing unit is input to the master processor.

Further, the control of the master processor may include:
when the master camera is used, the master processor sends a control signal to the master camera sensor, the master camera sensor forwards the control signaling to the slave camera sensor, the control signaling instructs the master camera sensor to be turned on, and the slave camera sensor to enter the standby mode; meanwhile the master processor sends a control signal for opening the data path from the master camera sensor to the multiplex switch and shutting the data path from the slave camera sensor to the multiplex switch; and
when the slave camera is used, the master processor sends a control signal to the master camera sensor, the master camera sensor forwards the control signaling to the slave camera sensor, the control signaling instructs the slave camera sensor to be turned on, and the master camera sensor to enter the standby mode; meanwhile the master processor sends a control signal for opening the data path from the slave camera sensor to the multiplex switch and shutting the data path from the master camera sensor to the multiplex switch.

Further, parallel interfaces are used for the data path from the master camera sensor to the multiplexer switch, the data path from the slave camera sensor to the multiplexer switch, and a data path from the multiplexer switch to the image processing unit, respectively, and a serial interface is used for a data path from the image processing unit to the master processor.

Based on the above method, the disclosure also provides an apparatus for controlling master-slave mode cameras in a wireless terminal, includes:
a master processor, configured to selectively turn on a master camera sensor or a slave camera sensor via a control interface and to control the multiplexer switch via the control interface to open a data path from the master camera sensor to an image processing unit or a data path from the slave camera sensor to the image processing unit;
a master camera sensor, configured to receive a control instruction from the master processor and forward the control instruction to the slave camera sensor and to be turned on or enter a standby state according to the control instruction;
a slave camera sensor, configured to receive the control instruction forwarded by the master camera sensor and to be turned on or to enter the standby state according to the control instruction;
a multiplexer switch, configured to open the data path from the master camera sensor to the image processing unit or the data path from the slave camera sensor to the image processing unit, according to the control signal sent by the master processor; and
the image processing unit, configured to receive and process image data transferred via the multiplexer switch and sent by the master camera sensor or the slave camera sensor and to transfer the processed data to the master processor via a serial interface.

Further, when the master camera is used, the master processor sends a control signal to the master camera sensor, the master camera sensor forwards the control signaling to the slave camera sensor, the control signaling instructs the master camera sensor to be turned on, and the slave camera sensor to enter the standby mode; meanwhile the master processor sends a control signal for opening the data path from the master camera sensor to the multiplex switch and shutting the data path from the slave camera sensor to the multiplex switch; and When the slave camera is used, the master processor sends a control signal to the master camera sensor, the master camera sensor forwards the control signaling to the slave camera sensor, the control signaling instructs the slave camera sensor to be turned on, and the master camera sensor to enter the standby mode; meanwhile the master processor sends a control signal for opening the data path from the slave camera sensor to the multiplex switch and shutting the data path from the master camera sensor to the multiplex switch.

Further, parallel interfaces are used for the data path from the master camera sensor to the multiplexer switch, the data path from the slave camera sensor to the multiplexer switch, and a data path from the multiplexer switch to the image processing unit, respectively, and a serial interface is used for a data path from the image processing unit to the master processor.

The dual camera solution provided by the disclosure has the following advantages: as the master processor does not need to use two sets of resources to control the two cameras, the resources of the master processor may be saved which otherwise will be occupied by the dual cameras, the dependency of the cameras on the master processor is reduced, so that the master processor may release more resources for other peripherals or other tasks. As the multiplexer switch isolates signals of the two camera sensors in a relatively thorough way, mutual interferences between the two cameras may be avoided and electromagnetic interferences may be decreased. As the two cameras of an ordinary mobile phone are at the front and back sides of the top of the mobile phone, in the disclosure, the multiplexer switch and the image processing unit may be laid out in the center of the two cameras on the top to shorten wires and facilitate discrete wiring and save wiring space.

### BRIEF DESCRIPTION OF THE DRAWINGS

FIG. 1 is a block diagram of a dual camera processing device in a wireless terminal according to the prior art;
FIG. 2 is a block diagram of an apparatus for controlling master-slave mode cameras in a wireless terminal according to the present invention; and
FIG. 3 is a flow chart of a method for controlling master-slave mode cameras in a wireless terminal according to the present invention.

### DETAILED DESCRIPTION

The basic principle of the disclosure lies in that: two camera sensors are connected via a bridge such that the two camera sensor are connected in a master-slave mode, data signals from the two camera sensors are isolated from each other through a multiplexer switch, and a different path may be opened as needed by the processor. In this way, whenever the user is using one of the cameras, data signals from another camera sensor will not be electrically communicated to the master processor. Accordingly, mutual interferences may be prevented, and engaged resources of the master processor may be decreased.

The disclosure will now be described with reference to the accompanying drawings and embodiments below, from which the objects, technical schemes and advantages of the disclosure will be obvious.

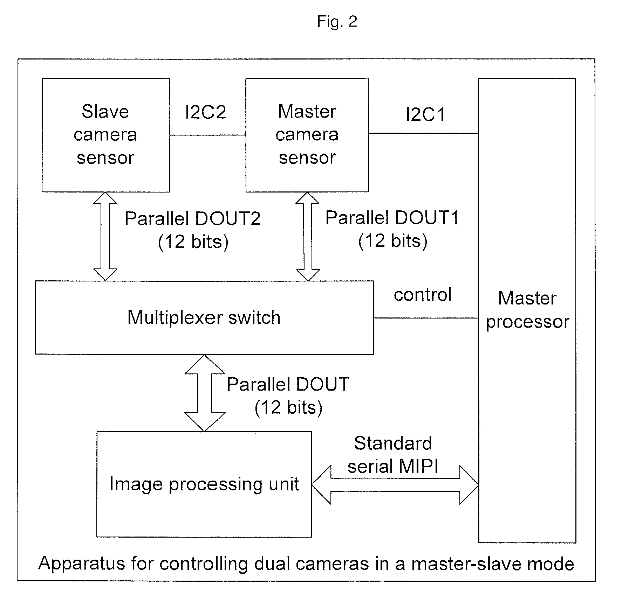

FIG. 2 is a block diagram of an apparatus for processing master-slave mode cameras in a wireless terminal according to the disclosure. The apparatus for processing master-slave mode cameras in the wireless terminal according to the disclosure includes: a master processor, a master camera sensor, a slave camera sensor, a multiplexer switch and an image processing unit.

The master processor is configured to selectively turn on the master camera sensor or the slave camera sensor via a control interface. In an embodiment of the disclosure, the master processor sends a control signal to the master camera sensor via an Inter-Integrated Circuit (12C) interface (i.e., an I2C1 interface).

The master camera sensor, which is a main camera sensor in the wireless terminal, has a higher requirement on pixels and is used for daily photo shooting and video shooting. The master camera sensor receives a control signal from the master processor via the I2C1 interface and is responsible for parsing and processing the control signal sent by the master processor.

The master camera sensor is connected to the multiplexer switch through a DOUT (Data output interface) interface DOUT1, wherein DOUT is a parallel interface.

When the camera function is used (regardless of whether the camera to be used is the master camera or the slave camera), the master processor sends a control instruction via the I2C1 interface. The instruction contains a flag bit indicating whether the master processor intends to control the master camera or the slave camera to operate. The master processor will generate a different flag bit value based on whether the user wants to take a photo or visual self-snapshot (the flag bit is "01" for photo taking, and "10" for visual self-snapshot). Meanwhile, the master processor will control the multiplexer switch through a GPIO (General-purpose Input/Output) interface between the master processor and the multiplex switch to open the master camera signal channel for photo taking or the slave camera signal channel for visual self-snapshot, based on whether the user wants to take a photo or visual self-snapshot.

After receiving an 12C control instruction sent by the master processor, the master camera sensor forwards the control instruction to the slave camera sensor via the 12C2 interface. Both the master and slave camera sensors parse the control instruction to identify the flag bit in the control instruction. If the flag bit is "01", the master camera sensor will be turned on. If the flag bit is "10" or "00", the master camera will enter a standby and sleep state. Accordingly, if the flag bit is "10", the slave camera sensor will be turned on. If the flag bit is "01" or "00", the slave camera sensor will enter a standby and sleep state.

The slave camera sensor, which is a camera sensor playing an auxiliary role in the wireless terminal, has lower requirement on pixels and is mainly used for self-snapshot during video conversation, instant messaging and other applications. The slave camera sensor is not directly linked to the master processor. Instead, control signals are forwarded by the master camera sensor.

The slave camera sensor is connected to the multiplexer switch via a parallel interface DOUT2.

The multiplexer switch is configured to open or cutoff the data path from the master camera sensor to the image processing unit and the data path from the slave camera sensor to the image processing unit in an alternative manner, according to the control signal sent by the master processor. Data from only one camera sensor is allowed to be inputted to the image processing unit at the same time, while data from the other camera sensor must be in a disconnected state. The multiplexer switch is connected to the image processing unit via a parallel interface.

The image processing unit is configured to receive and process image data transferred via the multiplexer switch and sent by the master camera sensor or the slave camera sensor, and to transfer the processed data to the master processor via a serial interface. In an embodiment of the present invention, the image processing unit is connected to the master processor via a MIPI (Mobile Industry Processor Interface) serial interface.

In the disclosure, after the wireless terminal is powered on, the master camera sensor is turned on by default, and the slave camera sensor is turned on only when the control signal sent by the master processor is parsed as requiring turning on the slave camera sensor.

For the sake of clarity, connections to synchronizing signals, clock signals, power supply and so on, which are same as those in the conventional camera sensor circuits, are omitted in the block diagram of the disclosure,

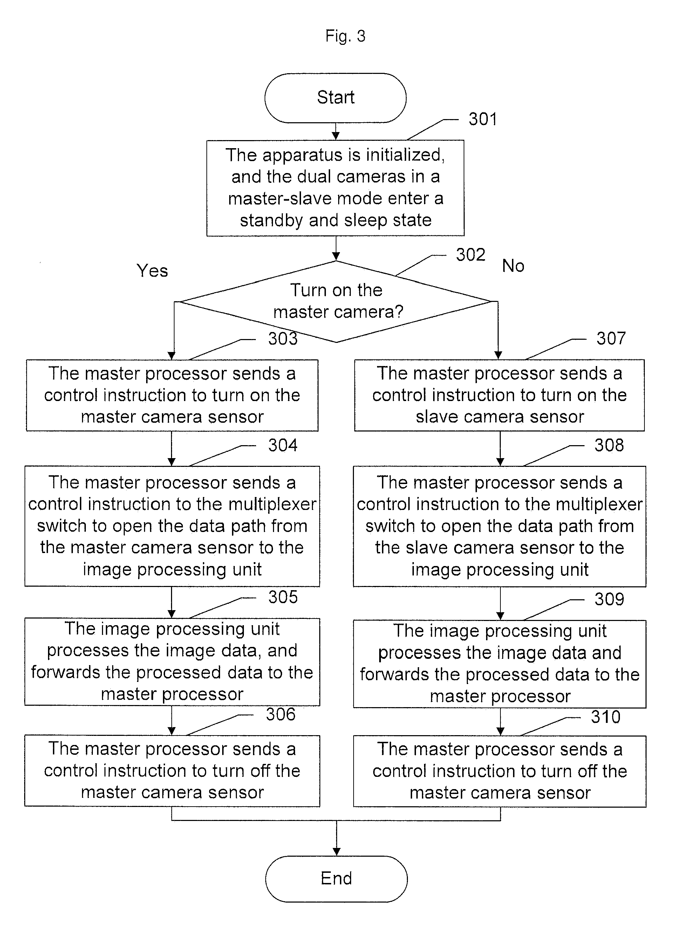

FIG. 3 is a flow chart of a method for controlling master-slave mode cameras in a wireless terminal according to the disclosure. The method includes the following steps:
Step 301: after the wireless terminal is powered on, the apparatus for controlling the master-slave mode cameras is initialized, and both the camera sensors in the master-slave mode enter a sleep and standby state.
Step 302: it is judged whether a user needs to activate the photo shooting and video shooting function of the wireless terminal. If yes, the method turns to Step 303, and if not, the method turns to Step 307.
Step 303: when the user activates the photo shooting and video shooting function of the wireless terminal, the master processor sends a control instruction to the master camera sensor via an interface I2C1, and the master camera sensor forwards the control instruction to the slave camera sensor via a control interface 12C2 between the master camera sensor and the slave camera sensor. If the control instruction instructs the master camera sensor to be turned on and the slave camera sensor to sleep, the master camera sensor will be turned on.
Step 304: meanwhile, the master processor sends an instruction for opening the data path for the master camera to the multiplexer switch via the control interface between the master processor and the multiplexer switch, the multiplexer switch opens the data path for the master camera according to the instruction, and the master camera sensor transmits data to the multiplexer switch via a parallel interface DOUT1; at the moment, the slave camera sensor path is in an off state.
Step 305: after receiving image data transferred from the multiplexer switch, the image processing unit processes the image data, and sends the processed data to the master processor via the serial interface between the image processing unit and the master processor.
Step 306: to end use of the master camera, the master processor sends a control instruction to shut down a controller of the master camera.

When both the master camera and the slave camera need to be turned off, the master processor sends a control instruction with a flag bit value of "00", such that both the master and slave camera sensors enter a standby and sleep state. If it is needed to switch to the other camera, the master processor may send a control instruction with a flag bit value of "10", to turn off the master camera sensor and turn on the slave camera sensor at the same time.

Step 307: when a user uses an application such as video phone or instant messaging, the master processor sends a control instruction to the master camera sensor via the interface I2C1, and the master camera sensor forwards the control instruction to the slave camera sensor via the interface 12C2. If the control instruction instructs the slave camera sensor to be turned on and the master camera sensor to sleep, the slave camera sensor will be turned on.

Step 308: meanwhile, the master processor sends an instruction for opening the data path for the slave camera to the multiplexer switch via the control interface between the master processor and the multiplexer switch, the multiplexer switch shuts down the data path for the master camera according to the instruction and opens the data path from the slave camera sensor to the image processing unit, and the slave camera sensor transmits data to the multiplexer switch via the parallel interface DOUT2.

Step 309: after receiving image data transferred from the multiplexer switch, the image processing unit processes the image data, and sends the processed data to the master processor via the serial interface between the image processing unit and the master processor.

Step 310: to end use of the slave camera, the master processor sends a control instruction to shut down a controller of the slave camera.

In the disclosure, for data from the master and slave camera sensors respectively, at any one time, only one data input channel may be opened. After the gated data passes the image processing unit, the data are transmitted to the master processor via the serial interface. Neither the master camera sensor nor the slave camera sensor has the data processing function. Instead, the two sensors share an external image processing unit.

From the perspective of using the slave camera sensor, the master processor does not have to know the existence of the slave camera sensor, control of the slave camera sensor is performed through the master camera sensor, and coordination and switching between the two cameras are performed through the master camera sensor. In this way, the master processor may be released from operations of coordination and switching between the two camera sensors, thus facilitating saving of the resources of the master processor. It plays a very positive role in balancing resources of the wireless terminal which has increasingly complex functions.

The foregoing descriptions are preferred embodiments of the disclosure and are not intended to limit the scope of the disclosure.

## Claims

1. A method for controlling master-slave mode cameras in a wireless terminal, comprising:
inputting, under control of a master processor, image data from a master camera sensor or image data from a slave camera sensor to an image processing unit via gating of a multiplexer switch; and inputting the image data processed by the image processing unit to the master processor.

2. The method according to claim 1, wherein, the inputting, under control of the master processor, the image data from the master camera sensor or the image data from the slave camera sensor to the image processing unit via gating of the multiplexer switch comprises:
when a master camera is to be used, sending, by the master processor, a control signal to the master camera sensor and the slave camera sensor, the control signaling instructing the master camera sensor to be turned on and the slave camera sensor to enter a standby state, meanwhile, sending, by the master processor, a control signal to open a data path from the master camera sensor to the multiplexer switch and cutoff a data path from the slave camera sensor to the multiplexer switch; and
when a slave camera is to be used, sending, by the master processor, a control signal to the master camera sensor and the slave camera sensor, the control signaling instructing the slave camera sensor to be turned on and the master camera sensor to enter the standby state, meanwhile, sending, by the master processor, a control signal to open the data path from the slave camera sensor to the multiplexer switch and cutoff the data path from the master camera sensor to the multiplexer switch.

3. The method according to claim 2, comprising: forwarding, the control signal sent by the master processor to the slave camera sensor, to the slave camera sensor via the master camera sensor.

4. The method according to claim 1, comprising: using parallel interfaces for the data path from the master camera sensor to the multiplexer switch, the data path from the slave camera sensor to the multiplexer switch, and a data path from the multiplexer switch to the image processing unit, respectively, and using a serial interface for a data path from the image processing unit to the master processor.

5. An apparatus for controlling master-slave mode cameras in a wireless terminal, comprising:
a master processor, configured to selectively turn on a master camera sensor or a slave camera sensor via a control interface and to control the multiplexer switch via the control interface to open a data path from the master camera sensor to an image processing unit or a data path from the slave camera sensor to the image processing unit;
a master camera sensor, configured to receive a control instruction from the master processor and to be turned on or enter a standby state according to the control instruction;
a slave camera sensor, configured to receive the control instruction from the master processor, and to be turned on or enter the standby state according to the control instruction;
a multiplexer switch, configured to open the data path from the master camera sensor to the image processing unit or the data path from the slave camera sensor to the image processing unit, according to the control signal sent by the master processor; and
an image processing unit, configured to receive and process image data sent by the master camera sensor or the slave camera sensor via the multiplexer switch and to transfer the processed data to the master processor.

6. The apparatus according to claim 5, wherein
when a master camera is to be used, the master processor sends a control signal to the master camera sensor and the slave camera sensor, the control signaling instructing the master camera sensor to be turned on and the slave camera sensor to enter a standby state, meanwhile, the master processor sends a control signal to open a data path from the master camera sensor to the multiplexer switch and cut off a data path from the slave camera sensor to the multiplexer switch; and
when a slave camera is to be used, the master processor sends a control signal to the master camera sensor and the slave camera sensor, the control signaling instructing the slave camera sensor to be turned on and the master camera sensor to enter the standby state, meanwhile, the master processor sends a control signal to open the data path from the slave camera sensor to the multiplexer switch and cut off the data path from the master camera sensor to the multiplexer switch.

7. The apparatus according to claims 5 or 6, wherein the master camera sensor communicates with the master processor by a control signal, the master camera sensor communicates with the slave camera sensor by the control signal, and the control signal sent by the master processor to the slave camera sensor is forwarded to the slave camera sensor via the master camera sensor.

8. The apparatus according to claims 5 or 6, wherein parallel interfaces are used for the data path from the master camera sensor to the multiplexer switch, the data path from the slave camera sensor to the multiplexer switch, and a data path from the multiplexer switch to the image processing unit, respectively, and a serial interface is used for a data path from the image processing unit to the master processor.
